# EUROPÄISCHE PATENTSCHRIFT

(11) **EP 2 706 268 B1**
(45) Veröffentlichungstag und Bekanntmachung des Hinweises auf die Patenterteilung: **01.07.2020**
(21) Anmeldenummer: 13178746.7
(22) Anmeldetag: 31.07.2013
(51) Int. Cl.: F16H 55/14, F16H 1/06, F16F 15/26, F16D 3/68

(54) **Zahnradgetriebe**
Gear transmission
Engrenage à roue dentée

(30) Priorität: 07.09.2012 DE 102012215870; 25.02.2013 DE 102013203018
(43) Veröffentlichungstag der Anmeldung: 12.03.2014
(73) Patentinhaber: Bayerische Motoren Werke Aktiengesellschaft, 80809 München (DE)
(72) Erfinder: Dr.Abdelfattah, Aschraf, 80939 Muenchen (DE); Dr.Hinderer, Thomas, 1100 Wien (AT)

(56) Entgegenhaltungen:
- DE-A1- 1 945 264
- DE-A1- 10 116 236
- DE-T2- 60 205 710
- GB-A- 979 541
- US-A- 1 928 763
- US-A- 3 667 317
- US-A- 4 674 351

## Beschreibung

Die Erfindung betrifft ein Zahnradgetriebe, insbesondere für ein Ausgleichswellengetriebe einer Hubkolben-Brennkraftmaschine, mit den Merkmalen aus dem Oberbegriff des Patentanspruchs 1.

Moderne Fahrzeugantriebe verfügen über mechanische Teilsysteme, welche die Wirkung von freien Massenkräften und -momenten im Hinblick auf akustische Emissionen reduzieren. Hierzu werden ein oder mehrere Unwuchten an einer Ausgleichswelle angebracht. Die dadurch, bei Drehung der Ausgleichswelle entstehenden Massenkräfte und folglich auch -momente wirken denjenigen des Kurbeltriebs einer Hubkolben-Brennkraftmaschine entgegen. Diese Ausgleichswellen werden beispielsweise über Zahnräder gegenläufig zur Kurbelwelle angetrieben. Aufgrund der zu reduzierenden Ordnungen der Massenkräfte und/oder-momente ergibt sich die notwendige Drehzahl der Ausgleichswelle relativ zur Kurbelwelle und damit auch die Übersetzung zwischen Ausgleichswelle und Kurbelwelle.

Im Lastfall, d. h. im gefeuerten Betrieb der Hubkolben-Brennkraftmaschine wirkt die Zündkraft auf die Kolben. Durch die Pleuelstangen wird diese auf die Kurbelwelle übertragen und versetzt diese in Rotation. Allerdings wird die Kurbelwelle nicht nur in Rotation versetzt sondern gleichzeitig auch um die Hoch- und Querachse gebogen. Dieser, auch als "Atmen" der Wange bezeichnete, deformierte Zustand der Kurbelwelle führt zu einer radialen Verlagerung des auf der Kurbelwelle sitzenden Zahnrades zum Antrieb der Ausgleichswelle. Die Rotation der Kurbelwelle wird über die bereits erwähnte Zahnradstufe auf die Ausgleichswelle übertragen. Aufgrund der radialen Verlagerung des Zahnrades auf der Kurbelwelle werden Radial- und Zahnnormalkräfte auf das auf der Ausgleichswelle sitzende Zahnrad übertragen. Folglich erfährt auch das Ausgleichswellenzahnrad eine Verlagerungsbahn, die sich in Form von Lagerkraftspitzen in der Ausgleichswellenlagerung bemerkbar machen. Da auch das Kurbelgehäuse aus einem schwingungsfähigem Kontinuum besteht, wird dieses aufgrund der eben erwähnten Lagerkraftverläufe zu Schwingungen angeregt. Die Amplituden der angeregten Schwingungsformen des Kurbelgehäuses führen zu einer unterschiedlichen Amplitudenauslenkung der einzelnen Eigenmoden des Kurbelgehäuses, das seinerseits wiederum mit dem umgebenden Medium, der Umgebungsluft, in Wechselwirkung steht und damit zu, für das menschliche Ohr wahrnehmbaren, akustischen Emissionen führen kann.

In der Regel werden bei akustischen Auffälligkeiten solcher Ausgleichswellengetriebe folgende Maßnahmen getroffen:
1. Schrägverzahnung für die Zahnräder;
2. Reduzierung des Zahnflankenspiels;
3. Verkleinerung des Zahnmoduls.

Zwei Beispiele für die Verringerung des Zahnflankenspiels sind aus der deutschen Patentschrift DE 199 55 474 C1 und aus der europäischen Patentschrift EP 1 705 405 B1 bekannt. In beiden Patentschriften wird jeweils ein Verfahren zur Einstellung des Verdrehflankenspiels miteinander kämmender Verzahnungspartner mittels einer lösbaren Beschichtung beschrieben, insbesondere für die Antriebszahnräder von Ausgleichswellen einer Hubkolben-Brennkraftmaschine. Die lösbare Beschichtung wird im Zahnzwischenraum zur Spieleinstellung gegeneinander zustellbarer Verzahnungspartner aufgetragen, welche sich beim Betrieb des Ausgleichswellengetriebes wieder von den Zahnflanken löst und anschließend ein optimales Spiel zwischen den Reibpartnern eingestellt ist.

Alle oben genannten Abhilfemaßnahmen sind jedoch in der Regel nur bei vergleichsweise hochfrequenten Geräuschemissionen (Zahnradheulen) einsetzbar. Im Fall einer dreizylindrigen Hubkolben-Brennkraftmaschine handelt es sich jedoch um eine vergleichsweise niederfrequente Anregung, die sich analog zum maximalen Zünddruck von Zylinder 1 verhält. Deshalb kann auch keine der oben genannten Maßnahmen, wie sich in Versuchen herausgestellt hat, hier auch nur im Ansatz die notwendige Abhilfe schaffen.

Weiter ist aus der deutschen Offenlegungsschrift 1 945 264 eine elastische, drehmomentübertragende Abstützung eines Zahnkranzes gegenüber einer Welle bekannt. Die Abstützung erfolgt mit einer Kunststoff- oder Gummischicht, die dadurch gekennzeichnet ist, dass sie unter Ausübung eines allseitigen Drucks zwischen Zahnkranz und Welle angeordnet ist.

Nachteilig ist jedoch die sehr teure mechanische Verspannung der Kunststoff- oder Gummischicht, die für eine Großserienverwendung üblicher Weise nicht kosteneffizient darstellbar ist.

Weiter ist die Verwendung eines derartigen, aus der DE 1 945 264 bekannten Zahnrades bei eingangs genannter Problemstellung nicht möglich, da für jedes Zahnrad in der Fertigung ein selektives Verschrauben und damit Vorspannen der zwei inneren Zahnradteile (Nabenteile) erfolgen muss, damit für jeden Belastungsfall eine definierte Steifigkeit des Elastomers eingestellt werden kann. Darüber hinaus führen die Kanten der einzelnen Zahnradbauteile die auf den Elastomer wirken insbesondere bei Impulsbelastung zu Spannungsspitzen, die den Elastomer unweigerlich durch Rissbildung über die Zeit zerstören.

Ein Ausgleichssystem eines Verbrennungsmotors mit einem geteilten Ritzel, das einen Ring aus nachgiebigem Material enthält, ist aus der DE 602 05 71 T2 bekannt.

Aufgabe der vorliegenden Erfindung ist es, eine Maßnahme aufzuzeigen, mit der sowohl eine niederfrequente als auch eine hochfrequente Anregung durch Kräfte und/oder Kraftimpulse eines Zahnradgetriebes, insbesondere für ein Ausgleichswellengetriebe einer Hubkolben-Brennkraftmaschine, insbesondere einer Dreizylinder-Hubkolben-Brennkraftmaschine, vermieden werden kann.
Diese Aufgabe wird durch ein Zahnradgetriebe mit den Merkmalen aus dem kennzeichnenden Teil des Patentanspruch 1 gelöst.
Aufgrund der Impulse, die vom Kurbelwellenzahnrad auf das Ausgleichswellenzahnrad bis in die Lagerstellen der Ausgleichswelle, bzw. in die Struktur des Kurbelgehäuses eingeleitet werden und damit zu akustischen Emissionen führen, wird vorgeschlagen, eine Entkopplung vorzunehmen, d. h. den oben beschriebenen Impulsweg zu unterbrechen. Realisierbar ist dies durch das erfindungsgemäß geteilte Zahnrad. Dabei wird der Zahnkranz des Zahnrades über eine im Vergleich zu Stahl weicheren Material, wie z. B. einer Elastomerspur oder ähnlichem auf dem Grundkörper des Zahnrades geführt. Dabei ist es weiterhin möglich, das notwendige Antriebsmoment für die Ausgleichswelle bereitzustellen. Trotzdem werden die Lagerkräfte durch die verhältnismäßig weiche Radialsteifigkeit des weicheren Materials, wie z. B. eines Elastomers um die Kraft- und Impulsspitzen reduziert und damit nicht mehr in das Kurbelgehäuse eingeleitet. Durch die resultierenden, vergleichsweise geringen Lagerkräfte kommt es zu einer massiven, nicht mehr wahrnehmbaren Reduzierung der akustischen Emissionen. Eine Zerstörung einzelner Zähne eines Zahnrades aufgrund kurzer Kraftimpulse ist sicher vermieden.

Dadurch, dass das innere und/oder äußere Teil auf der dem weicheren Material zugewandten Seite in axialer Ausrichtung ein Profil in Form einer Parabel dritter Ordnung aufweist, werden die inneren Spannungskonzentrationen reduziert und die Lebensdauer maximiert. Weiter wird ein Ablösen des weicheren Materials von den Zahnradbauteilen vermieden.

Vorteilhafte Weiterbildungen der Erfindung sind in den Unteransprüchen beschrieben.

Bevorzugt ist das weichere Material gemäß Patentanspruch 2 ein Elastomer oder ein Geflecht oder Gewirk aus einem metallischen Werkstoff oder ein Verbundwerkstoff, mit denen jeweils, aufgrund der erfindungsgemäßen Materialsteifheit eine ausreichende Dämpfung der Kraftimpulse möglich ist.

Weiter weist der Spalt bevorzugt gemäß Patentanspruch 3 eine radiale Dicke von 2% bis 30%, insbesondere 5% bis 10% eines Zahnraddurchmessers auf. In praktischen Versuchen hat sich dieser Dickenbereich als besonders dauerhaltbar herausgestellt, da negative chemische Einflüsse, z. B. durch ein Schmiermittel und Temperatureinflüsse beherrschbar sind.

Weiter wird das weichere Material gemäß Patentanspruch 4 material- und/oder formschlüssig mit dem inneren und dem äußeren Teil verbunden. Somit kann anwendungsspezifisch die beste Verankerungsmethode eingesetzt werden.

Die Ausführungsbeispiele gemäß Patentanspruch 5 und 6 sind bewährte Ausführungsformen.

Im Folgenden ist die Erfindung anhand eines Ausführungsbeispiels in fünf Figuren näher erläutert.
- Fig. 1: zeigt eine Aufsicht auf ein schematisch dargestelltes Kurbelgehäuse mit einem Kurbeltrieb.
- Fig. 2: zeigt einen Schnitt durch ein erfindungsgemäßes Zahnrad.
- Fig. 3: zeigt eine Aufsicht auf ein erfindungsgemäßes Zahnrad.
- Fig. 4: zeigt in einer Grafik ein Rechenergebnis von einem Zylinderinnendruckverlauf mit zugehörigen Zahnnormalkräften für eine Dreizylinder-Hubkolben-Brennkraftmaschine gemäß dem Stand der Technik.
- Fig. 5: zeigt in einer Grafik die Berechnung aus Fig. 4 jedoch bei Verwendung eines erfindungsgemäßen Zahnrades.

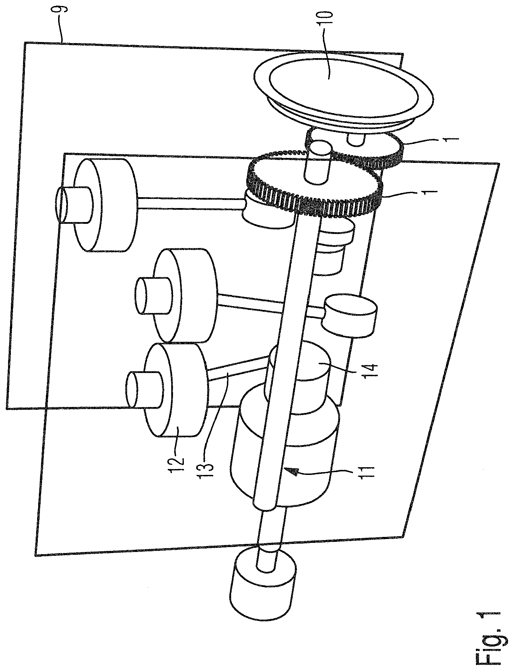

Im Folgenden gelten für gleiche Bauelemente in den Figuren 1 bis 3 die gleichen Bezugsziffern.

Fig. 1 zeigt eine Aufsicht auf ein schematisch dargestelltes Kurbelgehäuse 9 mit einem Kurbeltrieb für eine dreizylindrige Hubkolben-Brennkraftmaschine bestehend aus einer Kurbelwelle 14 mit zugehörigen Pleuel 13 und Kolben 12. Ferner ist eine Ausgleichswelle 11 vorgesehen, die über ein erfindungsgemäßes Zahnradgetriebe, bestehend aus zwei Zahnrädern 1 von der Kurbelwelle 14 antreibbar ist. Weiter ist stirnseitig an die Kurbelwelle 14 ein Torsionsschwingungsdämpfer 10 angeordnet.

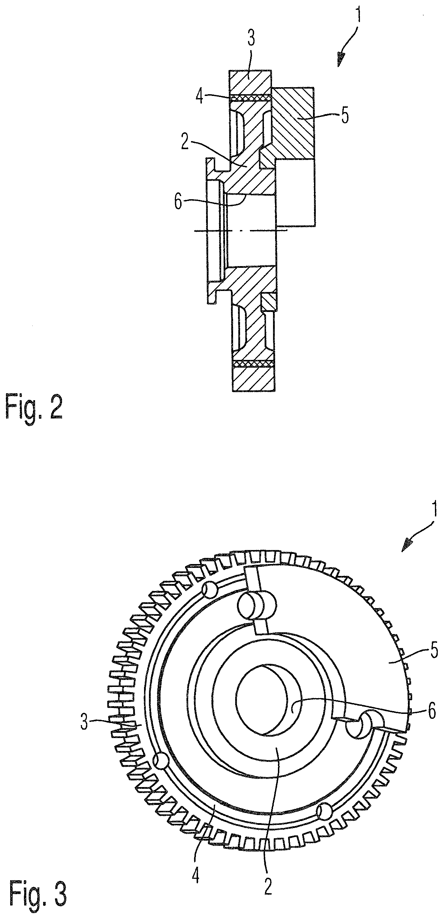

Fig. 2 zeigt einen Schnitt durch ein erfindungsgemäßes Zahnrad 1 für einen Antrieb der in Fig. 1 dargestellten Ausgleichswelle 11. Das Zahnrad 1 weist ein inneres Teil 2 (Nabenteil) auf, welches mittels einer zentrischen Bohrung 6 auf die Ausgleichswelle und/oder eine Kurbelwelle montierbar ist. Weiter weist das Zahnrad 1 ein äußeres Teil 3 auf, welches die Verzahnung trägt, der s. g. Zahnkranz. Erfindungsgemäß ist zwischen dem inneren Teil 2 und dem äußeren Teil 3 sich ein Spalt, der mit einem weicheren Material 4, wie z. B. einem Elastomer gefüllt ist. Weiter ist an das Zahnrad 1 ein Unwuchtgewicht 5 angeordnet, welches die Funktion der Ausgleichswelle unterstützt, in anderen Ausführungsbeispielen jedoch auch entfallen kann. In weiteren Ausführungsbeispielen kann das weichere Material auch ein Geflecht oder Gewirk aus einem metallischen Werkstoff oder ein Verbundwerkstoff sein.

Bevorzugt weist der Spalt eine radiale Dicke von 2 % bis 30 %, insbesondere von 5 % bis 10 % eines Zahnraddurchmessers auf. Weiter weist der Elastomer 4 bevorzugt eine Steifigkeit von 200 N/mm bis 15.000 N/mm auf, insbesondere eine Steifigkeit zwischen 500 N/mm bis 1000 N/mm auf. Bevorzugt handelt es sich bei dem weicheren Material 4 um einen Silikonwerkstoff.

Erfindungsgemäß weisen das innere und/oder äußere Teil auf der dem weicheren Material zugewandten Seite in axialer Ausrichtung ein Profil in Form einer Parabel dritter Ordnung auf.

Je nach Anwendungsfall kann das weichere Material material- und/oder formschlüssig mit dem inneren und dem äußeren Teil verbunden werden.

Fig. 3 zeigt eine Aufsicht auf das Zahnrad 1 aus Fig. 2. In Fig. 3 ist der Spalt zwischen dem inneren Teil 2 und dem äußeren Teil 3, in dem das weichere Material 4 angeordnet ist, gut erkennbar. Für einen Bogenabschnitt ist das weichere Material 4 durch das Unwuchtgewicht 5 abgedeckt. Um eine Schallübertragung zwischen dem äußeren Teil 3 und dem Unwuchtgewicht 5 zu vermeiden, ist ein kleiner axialer Spalt zwischen dem Unwuchtgewicht 5 und dem äußeren Teil 3 vorgesehen. Das heißt das Unwuchtgewicht 5 ist in diesem Ausführungsbeispiel ausschließlich am inneren Teil 2 befestigt.

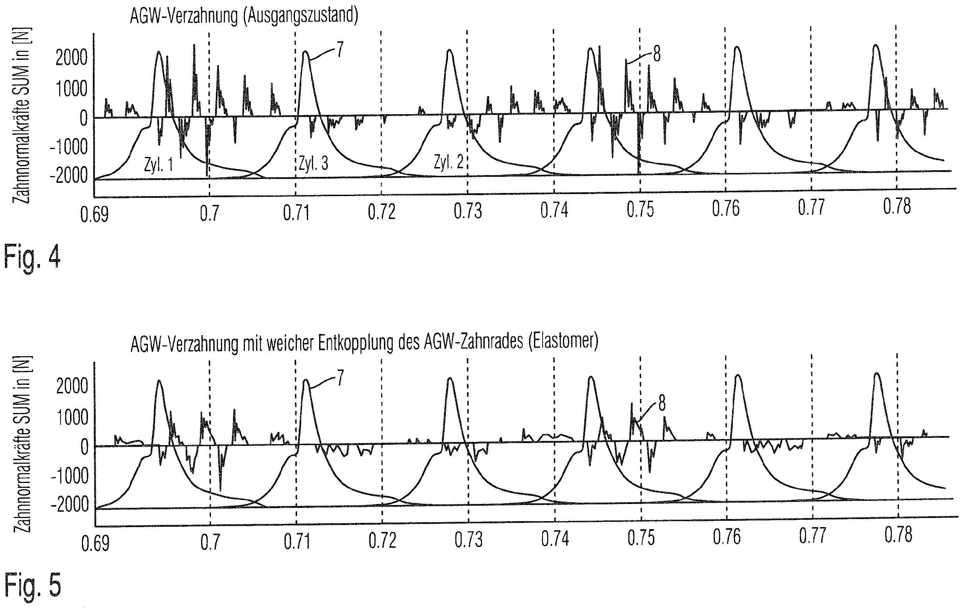

Die Fig. 4 und 5 zeigen jeweils in einer Grafik Berechnungsergebnisse eines Zylinderinnendrucks 7 einer dreizylindrigen Hubkolben-Brennkraftmaschine sowie zugehörige Zahnnormalkräfte 8, die auf Zähne eines AntriebsZahnrades 1 wirken. Über die Y-Achse sind die Zahnnormalkräfte 8 von - 2000 bis 2000 [N] aufgetragen, über die X-Achse ist ein zeitlicher Ablauf von 0,69 bis 0,78 [s] dargestellt, entsprechend sechs Zündungen der dreizylindrigen Brennkraftmaschine.

Fig. 4 zeigt hierbei das Berechnungsergebnis bei Verwendung eines Zahnrades gemäß dem Stand der Technik, Fig. 5 zeigt das Berechnungsergebnis bei Verwendung eines erfindungsgemäßen Zahnrades 1. Die als Fundament dienende Berechnung besteht dabei aus einem kompletten Mehrkörperdynamikmodell, wobei die Kurbelwelle 14, das Kurbelgehäuse und auch das Schwungrad sowie die Ausgleichswelle 11 als schwingungsfähiges Kontinuum berücksichtigt wurden.

In Fig. 4 ist anhand der Zahnnormalkraft 8 eine eindeutige Zuordnung der Zahnnormalkraft 8 auf das Zünden von Zylinder 1 möglich. Die gleichen Berechnungsergebnisse, jedoch für ein erfindungsgemäß ausgestaltetes Zahnrad 1 sind in der Fig. 5 zu entnehmen. Dabei ist eine signifikante Abnahme der Zahnnormalkraft 8 von nicht entkoppelt gegenüber entkoppelt, d. h. mit Elastomer 4 von maximal 2200 N auf 1000 N erkennbar.

Wie bereits dargestellt kommt es durch die erfindungsgemäße Ausgestaltung des Zahnrades 1 zu vergleichsweise geringen Zahnnormalkräften 8, die zu einer nicht mehr wahrnehmbaren Reduzierung der akustischen Emissionen führen.

Die in den Fig. 4 und 5 dargestellten Berechnungsergebnisse konnten auch durch Messungen am Prüfstand anhand einer realen Dreizylinder-Hubkolben-Brennkraftmaschine untermauert werden.

### Bezugszeichenliste:

1. Zahnrad
2. inneres Teil
3. äußeres Teil
4. weiches Material
5. Unwuchtgewicht
6. Bohrung
7. Zylinderinnendruck
8. Zahnnormalkräfte
9. Kurbelgehäuse
10. Torsionsschwingungsdämpfer
11. Ausgleichswelle
12. Kolben
13. Pleuel
14. Kurbelwelle

## Patentansprüche

1. Zahnradgetriebe, insbesondere für ein Ausgleichswellengetriebe einer Hubkolben-Brennkraftmaschine (9), wobei eine Ausgleichswelle (11) über das Zahnradgetriebe von einer Antriebswelle antreibbar ist und wobei die Ausgleichswelle (11) in einem angetriebenen Zustand einem fliehkrafterregtem Deformationsprozess unterliegt, wobei zumindest ein Zahnrad (1) mit einem Spalt in ein inneres Teil (2) und ein äußeres Teil (3) getrennt und der Spalt weitgehend drucklos mit einem weicheren Material (4) als das äußere und/oder das innere Teil (3, 2) ausgefüllt ist, so dass ein deformationsbedingter Kraftfluss und/oder ein Kraftimpuls zwischen dem inneren und dem äußeren Teil (2, 3) durch die innere Dämpfung des weicheren Materials (4) weitgehend verhindert oder verringert ist, wobei das weichere Material (4) eine Steifigkeit von 200 N/mm bis 15.000 N/mm, insbesondere 500 N/mm bis 1000 N/mm aufweist, **dadurch gekennzeichnet, dass** das innere und/oder äußere Teil (2, 3) auf der dem weicheren Material (4) zugewandten Seite in axialer Ausrichtung ein Profil in Form einer Parabel dritter Ordnung aufweist.

2. Zahnradgetriebe nach Patentanspruch 1,
**dadurch gekennzeichnet, dass** das weichere Material (4) ein Elastomer oder ein Geflecht oder Gewirk aus einem metallischen Werkstoff oder ein Verbundwerkstoff ist.

3. Zahnradgetriebe nach Patentanspruch 1 oder 2,
**dadurch gekennzeichnet, dass** der Spalt eine radiale Dicke von 2% bis 30%, insbesondere 5% bis 10% eines Zahnraddurchmessers beträgt.

4. Zahnradgetriebe nach einem der Patentansprüche 1 bis 3,
**dadurch gekennzeichnet, dass** das weichere Material (4) material- und/oder formschlüssig mit dem inneren und dem äußeren Teil (2,3) verbunden ist.

5. Zahnradgetriebe nach einem der Patentansprüche 1 bis 4,
**dadurch gekennzeichnet, dass** das Zahnradgetriebe eine Untersetzung oder eine Übersetzung oder eine 1:1 Übersetzung aufweist.

6. Zahnradgetriebe nach einem der Patentansprüche 1 bis 5,
**dadurch gekennzeichnet, dass** das Zahnradgetriebe ein Stirnradgetriebe ist.

## Claims

1. Gearwheel mechanism, in particular for a balancer shaft mechanism of a reciprocating-piston internal combustion engine (9), wherein a balancer shaft (11) can be driven by a drive shaft via the gearwheel mechanism and wherein the balancer shaft (11) is subjected, in a driven state, to a centrifugal force-exciting deformation process, wherein at least one gearwheel (1) is separated by a gap into an inner part (2) and an outer part (3), and the gap is filled, in a substantially pressureless manner, with a softer material (4) than the outer and/or the inner part (3, 2), with the result that a deformation-induced force flow and/or a force impulse between the inner and the outer part (2, 3) are/is largely prevented or reduced by the inner damping of the softer material (4), wherein the softer material (4) has a stiffness of 200 N/mm to 15 000 N/mm, in particular 500 N/mm to 1000 N/mm, **characterized in that**, on the side facing the softer material (4), the inner and/or outer part (2, 3) have/has, in axial orientation, a profile in the form of a third-order parabola.

2. Gearwheel mechanism according to Patent Claim 1,
**characterized in that** the softer material (4) is an elastomer or a braid or knit consisting of a metallic material or a composite material.

3. Gearwheel mechanism according to Patent Claim 1 or 2,
**characterized in that** the gap has a radial thickness of 2% to 30%, in particular 5% to 10%, of a gearwheel diameter.

4. Gearwheel mechanism according to one of Patent Claims 1 to 3,
**characterized in that** the soft material (4) is connected to the inner and the outer part (2, 3) by material-to-material bonding and/or in a form-fitting manner.

5. Gearwheel mechanism according to one of Patent Claims 1 to 4,
**characterized in that** the gearwheel mechanism has a step-down gear ratio or a step-up gear ratio or a 1:1 gear ratio.

6. Gearwheel mechanism according to one of Patent Claims 1 to 5,
**characterized in that** the gearwheel mechanism is a spur gear mechanism.

## Revendications

1. Engrenage à roue dentée, en particulier pour un engrenage d'arbre d'équilibrage d'un moteur à combustion interne à piston alternatif (9), un arbre d'équilibrage (11) pouvant être entraîné par un arbre d'entraînement par le biais de l'engrenage à roue dentée et l'arbre d'équilibrage (11), dans un état entraîné, étant soumis à un processus de déformation causé par la force centrifuge, au moins une roue dentée (1) étant divisée par une fente en une partie intérieure (2) et une partie extérieure (3) et la fente étant remplie essentiellement sans pression avec un matériau plus souple (4) que la partie extérieure et/ou la partie intérieure (3, 2), de telle sorte qu'un flux de forces causé par la déformation et/ou une impulsion de forces entre la partie intérieure et la partie extérieure (2, 3) soient essentiellement empêchés ou réduits par l'amortissement intérieur du matériau plus souple (4), le matériau plus souple (4) présentant une rigidité de 200 N/mm à 15 000 N/mm, en particulier de 500 N/mm à 1000 N/mm,
**caractérisé en ce que** la partie intérieure et/ou la partie extérieure (2, 3) présentent, sur le côté tourné vers le matériau plus souple (4) dans la direction axiale, un profil en forme de parabole de troisième ordre.

2. Engrenage à roue dentée selon la revendication 1,
**caractérisé en ce que** le matériau plus souple (4) est un élastomère ou un maillage ou un tricot constitué d'un matériau métallique ou un matériau composite.

3. Engrenage à roue dentée selon la revendication 1 ou 2,
**caractérisé en ce que** la fente présente une épaisseur radiale de 2 % à 30 %, en particulier de 5 % à 10 % d'un diamètre de la roue dentée.

4. Engrenage à roue dentée selon l'une quelconque des revendications 1 à 3,
**caractérisé en ce que** le matériau plus souple (4) est connecté par liaison de matière et/ou par engagement par correspondance de formes à la partie intérieure et à la partie extérieure (2, 3).

5. Engrenage à roue dentée selon l'une quelconque des revendications 1 à 4,
**caractérisé en ce que** l'engrenage à roue dentée présente une démultiplication ou une multiplication ou un rapport de transmission 1:1.

6. Engrenage à roue dentée selon l'une quelconque des revendications 1 à 5,
**caractérisé en ce que** l'engrenage à roue dentée est un engrenage à pignons droits.
